# EUROPEAN PATENT APPLICATION

(11) **EP 3 296 928 A1**
(43) Date of publication of application: **21.03.2018**
(21) Application number: 15891889.6
(22) Date of filing: 14.05.2015
(51) Int. Cl.: G06K 9/62, G06K 9/03, G10L 15/22

(54) **CHARACTER INPUT AND RECEPTION METHOD, CHARACTER INPUT AND RECEPTION DEVICE, AND CHARACTER INPUT AND RECEPTION PROGRAM**

(71) Applicant: Fujitsu Limited, Kawasaki-shi, Kanagawa 211-8588 (JP)
(72) Inventor: MATSUDA, Yugo, Kawasaki-shi Kanagawa 211-8588 (JP)
(74) Representative: Hoffmann Eitle
(86) International application number: PCT/JP2015/063957
(87) International publication number: WO 2016/181565

(57) **Abstract**

A method of receiving input characters with a computer is disclosed The computer executes a process which includes receiving, on a display image screen for displaying handwritten characters, a selection instruction with respect to a handwritten certain character; displaying, on the display image screen, a candidate display image screen for displaying a correction candidate with respect to the certain character, in response to a reception of the selection instruction, a display area for the candidate display image screen extending at least to a display area for the certain character, and performing a correction process for the certain character in response to a handwritten input with respect to the candidate display image screen.

## Description

### [Technical Field]

The disclosure is related to a method of receiving input characters, a character input reception apparatus and a character input reception program.

### [Background Art]

A tool is known which accepts handwritten input, speech input, etc., by a user and processes recognition characters, which has been obtained by character recognition for the handwritten input, the speech input, etc., as input characters.

### [Citation List]

[Patent Document 1] Japanese Laid-open Patent Publication No. 2012-43385
[Patent Document 2] Japanese Laid-open Patent Publication No. 2005-235116
[Patent Document 3] Japanese Laid-open Patent Publication No. 2001-337993

### [Summary]

### [Technical Problem]

With respect to the speech input or the handwritten input, when a first candidate recognition application presented by a recognition application is incorrect, the recognition application, in accordance with an instruction from a user, generates a candidate display image screen including correction candidates to be presented to a user so that the user selects the appropriate correction candidate.

However, it is not possible for the tool, which processes a recognized character whose input has been confirmed by the recognition application as an input character, to utilize other information obtained in the recognition of the recognized character (information other than the recognized character itself). Other information obtained in the recognition of the recognized character includes information related to handwritten strokes, and information related to correction candidates which could replace the recognized character, etc., for example.

Therefore, the conventional tool as described above cannot generate a candidate display image screen, and thus cannot display a candidate display image screen for a user who wants to correct the recognized character given as an input character. Accordingly, in the above conventional tool, when the user desires to correct a certain character given as an input character, the user need to select the certain character and then perform speech input and handwriting input again in order that the certain character is deleted or replaced with another character.

Also, when the user selects the character, which the user desires to correct, to correct it, a probability of correction candidates presented via the candidate display image screen being also inappropriate is high because of a fact that the first candidate (character to be corrected by the user) recognized based on the same speech or handwritten input is inappropriate. If the appropriate correction candidate does not exist in the correction candidates presented via the candidate display image screen, the user is required to cancel the candidate displays (i.e., return to the original input screen) to perform an input again.

According to an aspect, an object is to reduce a load for a correction with respect to a certain character handwritten in a display screen for handwritten characters.

### [Solution to Problem]

According to an aspect of a disclosure, a method of receiving input characters with a computer is provided, the computer executing a process, the process comprising: receiving, on a display image screen for displaying handwritten characters, a selection instruction with respect to a handwritten certain character; displaying, on the display image screen, a candidate display image screen for displaying a correction candidate with respect to the certain character, in response to a reception of the selection instruction, a display area for the candidate display image screen extending at least to a display area for the certain character, and performing a correction process for the certain character in response to a handwritten input with respect to the candidate display image screen.

### [Advantageous Effects of Invention]

According to an aspect of a disclosure, it becomes possible to reduce a load for a correction with respect to a certain character handwritten in a display screen for handwritten characters.

### [Brief Description of Drawings]

Fig. 1 is a diagram explaining a program configuration according to a first embodiment.
Fig. 2 is a diagram illustrating one form of a character input reception apparatus.
Fig. 3 is a diagram illustrating another form of the character input reception apparatus.
Fig. 4 is a diagram illustrating an example of a hardware resource configuration of the character input reception apparatus.
Fig. 5 is a diagram illustrating an example of a functional configuration of the character input reception apparatus.
Fig. 6 is a schematic flow chart explaining an example of a character input process performed by a processing unit according to a first embodiment.
Fig. 7 is a schematic flow chart explaining an example of a character correction process performed by a processing unit according to a first embodiment.
Fig. 8 is a diagram illustrating an example of stroke information.
Fig. 9 is a diagram explaining coordinate information related to a stroke.
Fig. 10 is a diagram illustrating an example of recognition result information.
Fig. 11 is a diagram illustrating an example of a screen on which a recognized character is displayed.
Fig. 12 is a diagram explaining display position information.
Fig. 13 is a diagram illustrating an example of a way of inputting a selection instruction.
Fig. 14 is a diagram illustrating an example of a candidate display image screen.
Fig. 15 is a diagram illustrating an example of a selection operation among correction candidates.
Fig. 16 is a diagram illustrating a state of handwriting being performed outside a candidate display.
Fig. 17 is a diagram illustrating a state of handwriting being performed inside a candidate display.
Fig. 18 is a diagram illustrating an example in which a correction target character is replaced with the correction candidate by the selection operation.
Fig. 19 is a diagram illustrating a stroke related to a handwritten deletion instruction.
Fig. 20 is a diagram illustrating an example in which the correction target has been deleted due to the deletion instruction.
Fig. 21 is a diagram illustrating an example in which the correction target character is replaced with a handwritten correction recognition character.
Fig. 22 is a diagram explaining a program configuration according to a second embodiment.
Fig. 23 is a diagram illustrating an example of a functional configuration of a character input reception apparatus.
Fig. 24 is a schematic flow chart explaining an example of processing by the character input reception apparatus according to the second embodiment.
Fig. 25 is a schematic flow chart explaining an example of a character input process performed by a processing unit according to a third embodiment.
Fig. 26 is a schematic flow chart explaining an example of a character correction process performed by a processing unit according to a third embodiment.
Fig. 27 is a diagram illustrating an example of candidate information.
Fig. 28 is a schematic flow chart explaining an example of a character input process performed by a processing unit according to a fourth embodiment.
Fig. 29 is a diagram illustrating a variant.
Fig. 30 is a diagram illustrating another way of handwriting a correction content.
Fig. 31 is a diagram illustrating yet another way of handwriting a correction content.
Fig. 32 is a diagram illustrating yet another way of handwriting a correction content.
Fig. 33 is a diagram illustrating yet another way of handwriting a correction content.
Fig. 34 is a diagram illustrating another example of a way of inputting a selection instruction.

### [Description of Embodiments]

In the following, embodiments are described in detail with reference to appended drawings.

In the following description, a character string is a concept that represents an aggregate that includes one or more characters. Therefore, the character string may also be a single character. Not only Hiragana, Katakana, alphabet, Chinese characters, numbers, but also symbols fall within the concept of a character. Further, a correction of the character string is a concept that represents, not only replacement of the character string according to a new string, deletion of the character string, but also an insertion of new character string in the character string, etc.

### [First Embodiment]

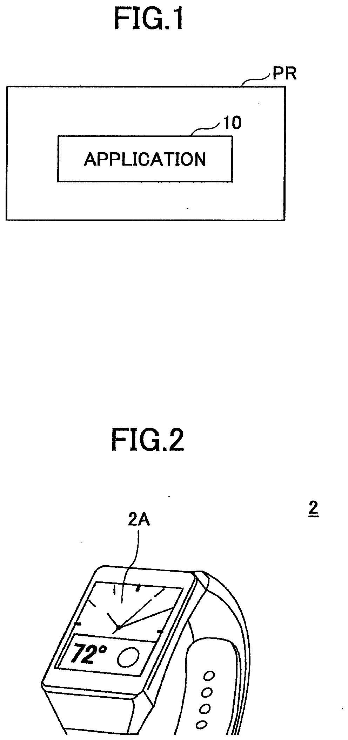

Fig. 1 is a diagram explaining a program configuration according to an embodiment (a first embodiment).

A program PR includes an application 10. In the following description, an apparatus for executing the application 10 is represented as "character input reception apparatus 1".

Application 10 includes a handwriting character recognition application (an example of a recognition application) that recognizes handwritten input characters, and displays recognized characters. The "handwriting input" is an input method that expresses characters that a user wants to input by moving a hand (finger in the following example), and it is a concept including an input method using a stylus.

The application 10 generates, in response to a selection instruction with respect to a character string whose input has been confirmed by a recognition application, a candidate display image screen that displays correction candidates. The character string whose input has been confirmed by the recognition application is, for example, a character string in a state in which its input has been confirmed at least temporarily, and means that it is different from a character string for which an underline, etc., representing a unconfirmed state (i.e., state in which a correction is possible) is displayed. For example, the character string whose input has been confirmed by the recognition application is in a state in which the character string cannot be corrected as long as a selection instruction is not input for the character string. The election instruction is an instruction which a user inputs. The selection instruction may be in any form as long as the application 10 is able to identify a correction target character in the character string and the application 10 can recognize that the user intends the correction of the character string (character to be corrected). Note that, if the character string to be corrected consists of one character, the selection instruction may be in any form as long as the application 10 can recognize that the user intends the correction of the character. A way of inputting the selection instruction is described hereinafter.

The candidate display image screen is generated based on stroke information stored by the application 10. This stroke information is described hereinafter.

The application 10 recognizes, based on the stroke the user has handwritten to the candidate display image screen, a character representing a correction content with respect to the character to be corrected.

The application 10 corrects, based on a recognition result (a content of a handwritten input) based on strokes handwritten to the candidate display image screen, the character string relating to the selection instruction. A specific example of a correction content will be described hereinafter.

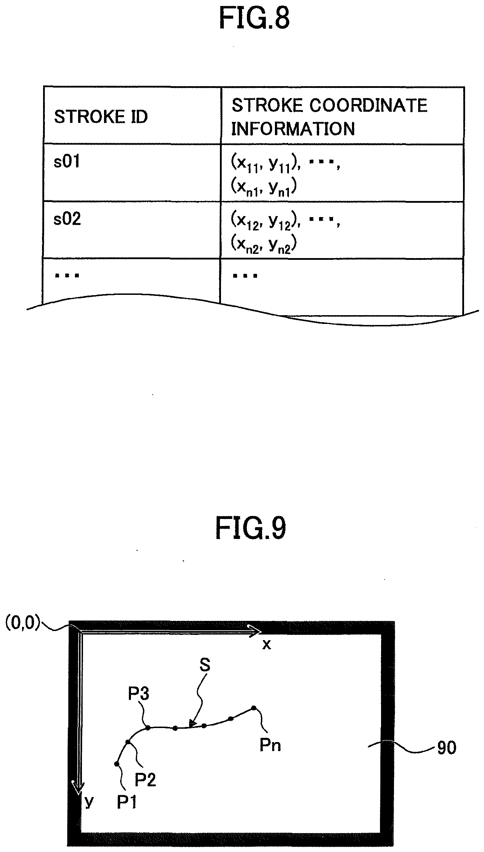

A stroke corresponds to a trajectory (coordinate sequence) of a finger or a stylus at the time of handwriting input. One unit of the stroke is one continuous track (i.e., a trajectory of one handwriting) on coordinate axes and a time axis. The coordinate axes are associated to an operation display surface 90 on which handwriting input is to be performed (see Fig. 9). One character can be represented by one or more strokes.

Fig. 2 is a diagram illustrating one form of a character input reception apparatus.

As illustrated in Fig. 2, for example, the character input reception apparatus 1 can be wearable to the user. In the example illustrated in Fig. 2, the character input reception apparatus 1 is a wristwatch type device 2 that can be worn on the user's arm with a belt, and is provided with a display unit 2A on which a touch operation is possible. In this case, the display unit 2A forms an operation display screen for an input by handwriting.

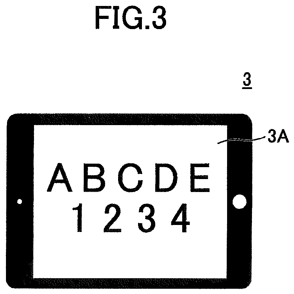

Fig. 3 is a diagram illustrating another form of the character input reception apparatus.

For example, as illustrated in Fig. 3, the character input reception apparatus 1 can be in the form of a terminal that can be carried by the user. In the example illustrated in Fig. 3, the character input reception apparatus 1 is a tablet-type device 3 and has a display unit 3A on which a touch operation is possible. In this case, the display unit 3A forms an operation display screen for an input by handwriting.

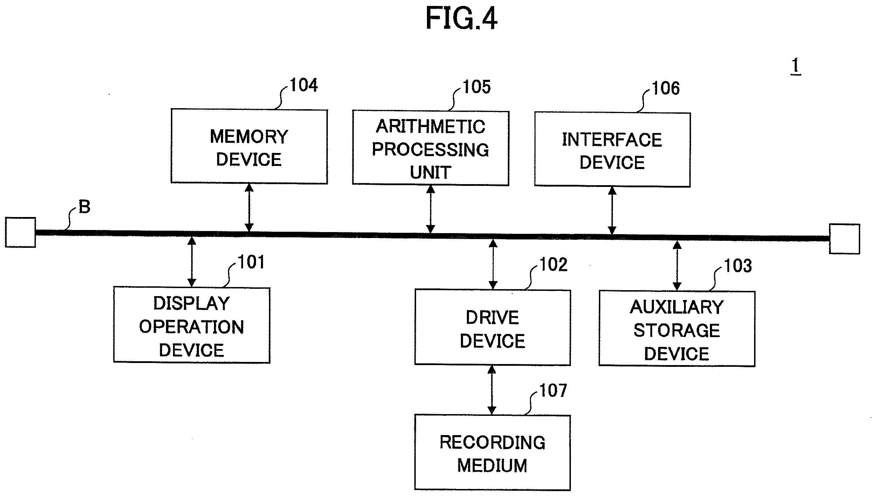

Fig. 4 is a diagram illustrating an example of the hardware configuration of the character input reception apparatus. In the example illustrated in Fig. 4, the character input reception apparatus 1 is configured by one computer. However, the character input reception apparatus 1 may be configured by a collection of one or more computers.

The character input reception apparatus 1 includes a display operation device 101, a drive device 102, an auxiliary storage device 103, a memory device 104, an arithmetic processing unit 105, and an interface device 106 such that they are mutually connected by a bus B.

The display operation device 101 is, for example, a touch panel or the like, and is used for input of various signals and display (output) of various signals. The display operation device 101 includes an operation display surface on which a touch operation is possible. The touch operation includes an operation for handwriting input, and also includes any type of operations such as tap, slide, pinch, and the like. In the case of the device 2 illustrated in Fig. 3, the display operation device 101 is realized by the display unit 2A. In the case of the device 3 illustrated in Fig. 4, the display operation device 101 is realized by the display unit 3A. The interface device 106 includes a model, a LAN card, etc., and is used for connecting to a network.

The application 10 is at least a part of various programs for controlling the character input reception apparatus 1. These programs are provided by distribution via a recording medium 107 or downloaded from the network, for example. The recording medium 107 having the application 10 stored therein may be of various types, including a recording medium for optically, electrically or magnetically storing information, such as a CD-ROM, a flexible disk, a magneto-optical disk, and a semiconductor memory for electrically storing information, such as a ROM, a flash memory.

When the recording medium 107 storing the application 10 is set in the drive device 102, each program is installed in the auxiliary storage device 103 from the recording medium 107 via the drive device 102. Each program downloaded from the network is installed in the auxiliary storage device 103 via the interface device 106.

The auxiliary storage device 103 stores the installed application 10 and stores an OS (Operating System) which is basic software, necessary files, data, and the like. The memory device 104 reads and stores the respective programs in the auxiliary storage device 103 at the time of activation of each program. Then, the arithmetic processing unit 105 implements various processes as described hereinafter in accordance with each program stored in the memory device 104.

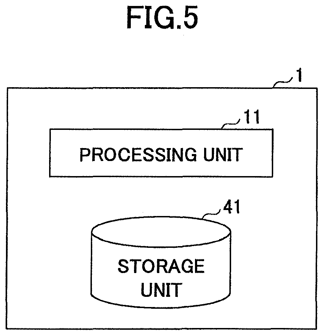

Fig. 5 is a diagram illustrating an example of a functional configuration of the character input reception apparatus. The character input reception apparatus 1 includes a processing unit 11, and a storage unit 41.

The processing unit 11 is realized by the arithmetic processing unit 105 executing the application 10. The storage unit 41 is realized by the auxiliary storage device 103 and the memory device 104.

The character input reception apparatus 1 executes a character input process and a character correction process. Hereinafter, examples of the character input process and the character correction process executed by the character input reception apparatus 1 are explained.

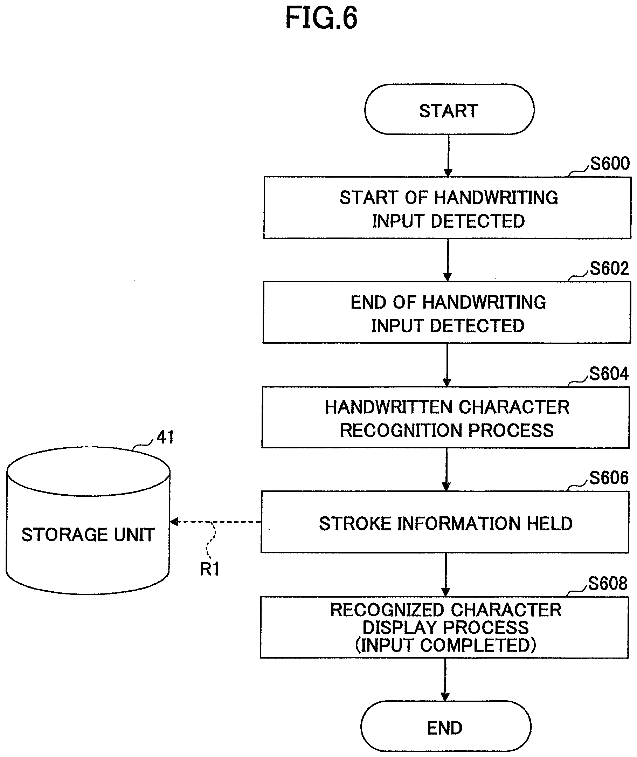

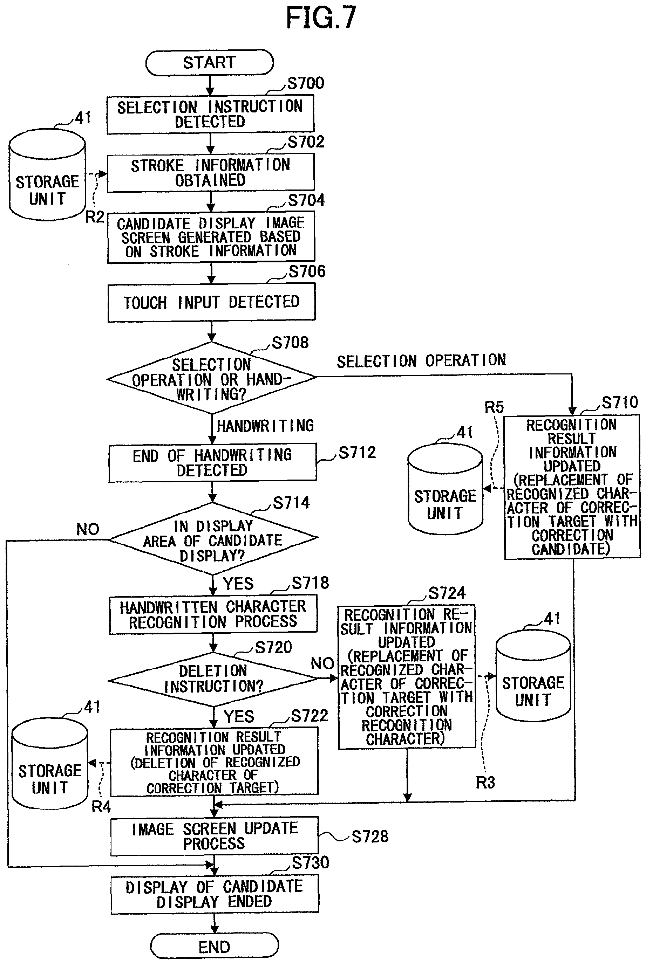

Figs. 6 and 7 are schematic flow charts explaining an example of processing by the character input reception apparatus 1. Fig. 6 is a schematic flow chart explaining an example of the character input process performed by the processing unit 11. Fig. 7 is a schematic flowchart explaining an example of the character correction processing executed by the processing unit 11. In Figs. 6 and 7, dotted lines and arrows R1 to R5 connected to the storage unit 41 indicate writing or reading data to or from the storage unit 41 related to the corresponding process.

In step S600, the processing unit 11 detects a start of the handwriting input. The start of handwriting input is detected when the handwriting input is detected in a state where handwritten input is not detected for a certain time or more, for example.

In step S602, the processing unit 11 detects an end of the handwriting input. The end of handwriting input is detected when the handwriting input is not detected for the certain time.

In step S604, the processing unit 11 recognizes, based on one or more strokes obtained from the start of the handwriting input detected in step S600 until the end of the handwriting input detected in step S602, one or more of the characters corresponding to the one or more strokes. Hereinafter, the character thus recognized is also referred to as "recognition character". For example, when recognizing one or more characters based on one or more strokes, the processing unit 11 derives a plurality of candidates that can be formed by the one or more strokes, and calculates an evaluation value (score) representing likelihood of each of the derived candidates. In this case, when there is a possibility of a combination of two or more characters, the processing unit 11 creates a plurality of combination candidates, and calculates, for each combination candidate, the evaluation value representing the likelihood of the candidate. Then, the processing unit 11 outputs the candidate having the highest evaluation value as the first candidate (recognized character). Note that the recognized character is different from a character of a correction candidate (suggestion) described hereinafter. The recognized character generally corresponds to the first candidate (the likeliest candidate), and the correction candidates corresponds to the candidate which is likely to be the second and so on. In the following, the characters of the correction candidates are simply referred to as "correction candidates".

In step S606, the processing unit 11 stores stroke information, which has been used for recognition in step S604, in the storage unit 41 (see the arrow R1). In the following, as an example, the stroke information is assumed to include stroke coordinate information, and recognition result information.

The stroke coordinate information includes coordinate information of each stroke. In the example illustrated in Fig. 8, the stroke coordinate information is given an ID (stroke ID) for each obtained stroke, and is managed on a stroke ID basis. Here, as an example, the stroke ID also represents the time series order between strokes. However, the stroke information may separately include time information such as a time stamp.

For example, in the example illustrated in Fig. 8, "s01", "s02",... correspond to the stroke ID and the numerals (for example, "01" etc.) after "s" represent the time series order of each stroke. The stroke coordinate information on each stroke includes a coordinate string of a plurality of points representing the stroke. In the example illustrated in Fig. 8, for example, the stroke coordinate information of the stroke ID = s01 includes a coordinate sequence of n coordinate values (x 11, y 11), ... , (x n1, y n1). That is, the stroke of the stroke ID = s01 is formed by connecting the respective coordinates of (x 11, y 11), ... , (x n1, y n1) of the coordinate sequence. As illustrated in Fig. 9, the n coordinate values correspond to the respective coordinate values of the points P1,..., Pn forming the stroke S relating to the stroke ID = s01. Note that the coordinate system related to the stroke coordinate information has a reference at the operation display surface 90, and has an origin of the coordinate system fixed to the upper left corner of the operation display surface 90, for example, as illustrated in Fig. 9.

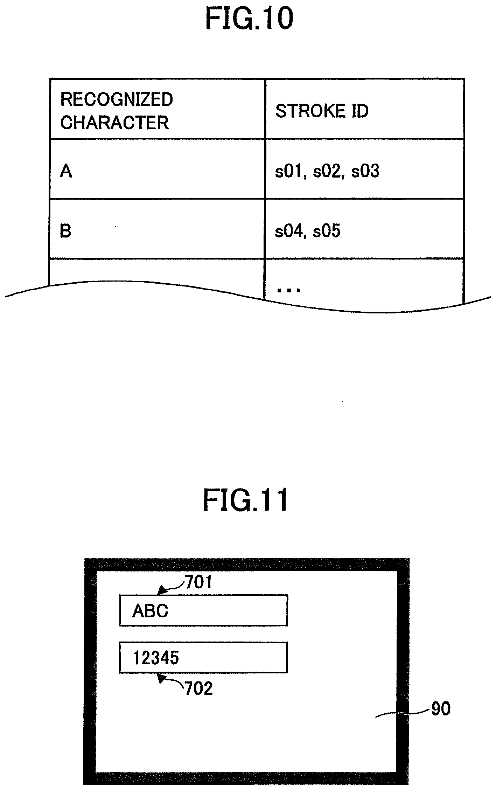

The recognition result information represents a correspondence between the strokes used for recognition in step S604 and the character (recognized character) recognized by the strokes. The recognition result information is stored for each recognized character, as illustrated in Fig. 10. For example, in the example illustrated in Fig. 10, "A", "B " ··· are representative of the recognized character, respectively. The recognition result information includes each recognized character, and stroke IDs representing the respective strokes forming the respective recognized characters. In the example illustrated in Fig. 10, for example, the recognition result information related to the recognized character "A" includes three stroke IDs "s01", "s02", and "s03". This indicates that the character "A" has been recognized based on the combination of the three strokes related to the stroke IDs "s01", "s02", and "s03".

In step S608, the processing unit 11 displays one or more recognized characters based on the recognition result information. That is, the processing unit 11 displays a character string containing one or more recognized characters on the display operation device 101 based on the recognition result information. In this manner, the character string displayed on the display operation device 101 by a series of handwritten inputs is confirmed when the latest recognition result for the series of handwritten input is reflected thereon. Fig. 11 is a diagram schematically illustrating an example of a screen of the display operation device 101 on which recognized characters are displayed. In the example illustrated in Fig. 11, a character string 701, which includes three recognized characters "A", "B" and "C", and a string 702, which includes 5 recognized characters "1", "2", "3", "4" and "5", are displayed.

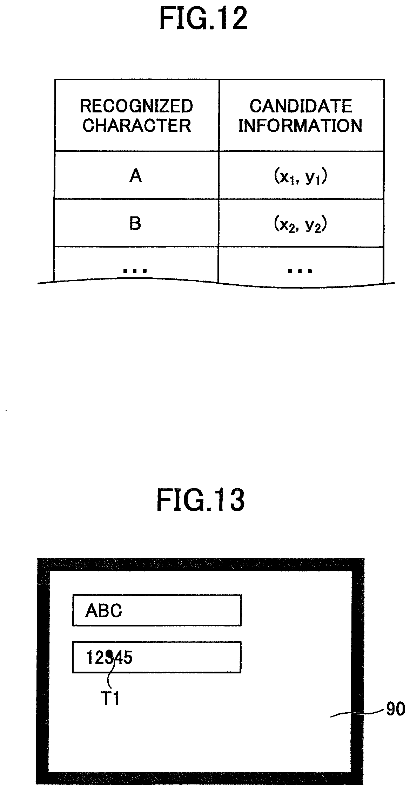

Further, in step S608, the processing unit 11 generates display position information indicating one or more displayed recognition characters and indicating display positions thereof, and stores the display position information in the storage unit 41. The display position information is stored for each recognized character, as illustrated in Fig. 12. The display position information may be the coordinate information indicating the coordinates of the center of the display position of the recognized character, or may be a set of items of coordinate information representing a plurality of coordinates representing the display range of the recognized character. In the example illustrated in Fig. 12, the display position information includes coordinate information of the center of the display position related to the recognized character "A", "B" ···. For example, the coordinate system of the display position information is the same as the coordinate system according to the stroke coordinate information, such that the operation display surface 90 of the display operation device 101 becomes the reference and the origin of the coordinate system the upper left of the operation display surface 90 is fixed to the corner (see Fig. 9), for example.

Next, referring again to Figs. 13 to 21, the processing of Fig. 7 is described. Here, as an example, in a state where the recognized character as illustrated in Fig. 11 is displayed on the operation display surface 90 of the display operation device 101, it is assumed that the user wants to correct the recognized character "3". Figs. 13 to 21 are views schematically illustrating an example of various states of the screen of the display operation device 101.

In step S700, the processing unit 11 detects the selection instruction for a character string displayed according to the process illustrated in Fig. 6 (an example of a character string whose input has been confirmed by the recognition application). For example, the selection instruction is detected, in a state where the recognized character is displayed on the display operation device 101, by detecting a touch input to the display area of the recognized character in the operation display surface 90. In this case, the processing unit 11 identifies, based on the display position information stored in the storage unit 41, the recognized character, which is being displayed at a position corresponding to the touch input position, as a correction target. For example, in the example illustrated in Fig. 13, the user would like to correct the character "3", and thus performs a touch input to the display position of the character "3" in the display operation device 101. In Fig. 13, a point of the touch input by the user is illustrated and indicated by T1.

In step S702, the processing unit 11 obtains the stroke information stored in the storage unit 41 (the stroke coordinate information and the recognition result information) (refer to an arrow R2). In this case, the processing unit 11 obtains the stroke information relating to the recognized character of the correction target.

In step S704, the processing unit 11 derives correction candidates based on the stroke information obtained in step S702, and generates a candidate display image screen that displays the derived correction candidates. The candidate display image screen includes selectable correction candidates. The candidate display image screen is formed with respect to a portion or substantially the entire screen of the operation display surface 90 of the display operation device 101. In this case, the display area of the candidate display of the candidate display image screen extends to the display area of the recognized character of the correction target. For example, if the recognition character "3" is the correction target, the processing unit 11 derives the correction candidates " 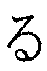 ", " 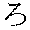 ", ..., " 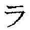 ". In the following, as an example, it is assumed that the candidate display image screen is formed on the entire screen of the operation display surface 90 of the display operation device 101.

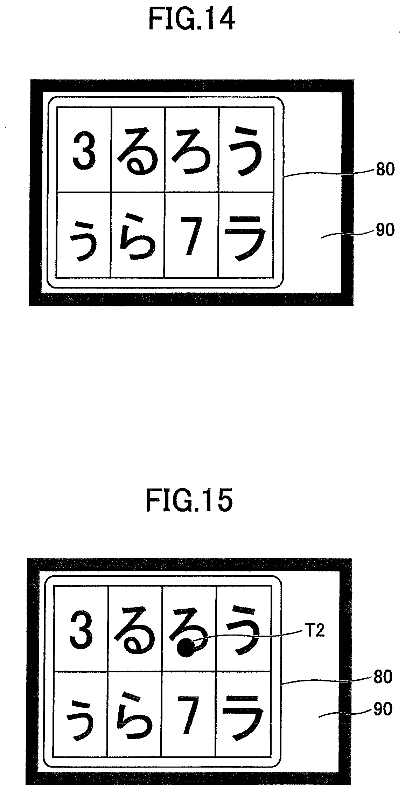

In the example illustrated in Fig. 14, the candidate display image screen is formed on the entire screen of the operation display surface 90 of the display operation device 101. Further, in the example illustrated in Fig. 14, the candidate display image screen has a candidate display 80 which represents separately eight correction candidate "3", " 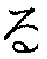 " , " 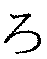 ", ..., " 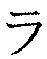 " such that the candidate display 80 is superimposed on the display area of the recognized character "3" of the correction target. Note that, in the example illustrated in Fig. 14, the candidate display has included as a correction candidate the character "3" that is the same as the recognized character "3" of the correction target; however, the candidate display is not required to include such a correction target.

In step S706, the processing unit 11, after having displayed the candidate display image screen, detects a touch input on the operation display surface 90.

In step S708, the processing unit 11 determines whether the touch input detected in step S706 is a selection operation or a handwritten input. For example, when the touch input detected in step S706 is a short single touch input (i.e. a single tap) to the display area of the candidate display, the processing unit 11 determines that the touch input is a selection operation. The handwriting is detected when a stroke of more than a certain length is detected, for example. If the touch input detected in step S706 is determined to be a selection operation, the process goes to step S710, and if it is determined to be a handwritten input, the process goes to step S712.

For example, in the example illustrated in Fig. 15, the user would like a replacement with a correction candidate " 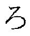 ", and performs a touch input to the display position of the character " 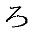 " of the candidate display 80. In Fig. 15, on the candidate display image screen, the point of the touch input by the user is rendered (see T2). In this case, the process goes to step S710.

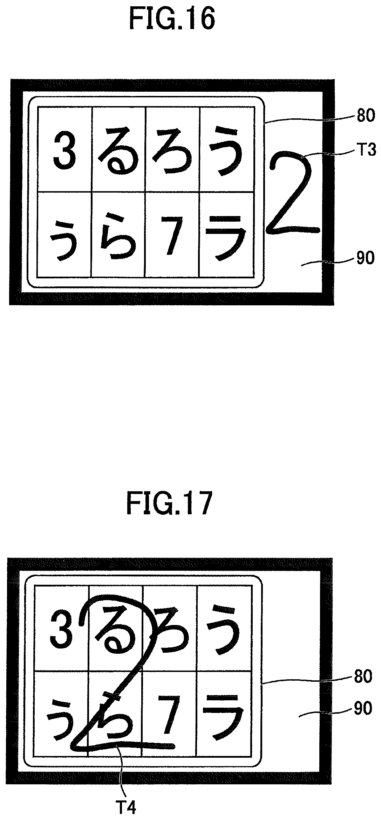

In the example illustrated in Fig. 16, the user performs a handwriting input to the area outside the candidate display 80. In the example illustrated in Fig. 16, on the candidate display image screen, the stroke input by handwriting is rendered (see T3). In this case, the process goes to step S712.

In the example illustrated in Fig. 17, the user performs handwriting of the correction content within the display area of the candidate display 80 since the desired correction candidate is not present in the candidate display 80. In the example illustrated in Fig. 17, on the candidate display image screen, the stroke related to the correction content "2" is rendered (see T4). In this case, the process goes to step S712.

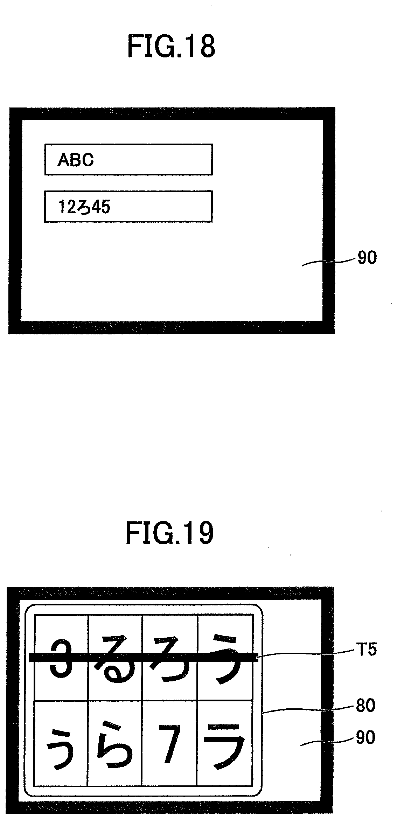

In step S710, the processing unit 11 identifies (selects) the correction candidate corresponding to the touch input position (the position of the single tap) as a correction recognition character. Then, the processing unit 11 updates (reflects the replacement) the recognition result information in the storage unit 41 such that the recognized character of the correction target is replaced with the selected correction candidate (correction recognition character) (see the arrow R5). As a result, by a screen update process in the next step S728, as illustrated in Fig. 18, the screen of the operation display surface 90 of the display operation device 101 is updated to display a character string in which the recognized character "3" of the correction target is replaced with the correction recognition character " 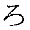 ".

In step S712, the processing unit 11 detects the end of the handwriting input. The end of handwriting input is detected when the handwriting input is not detected for the certain time ΔT.

In step S714, the processing unit 11 determines whether handwriting input, which has been detected in step S706, is performed in the candidate display of the display area. For example, if a predetermined ratio or more of a passage region of the stroke of the handwriting input is present in the candidate display of the display area, the processing unit 11 determines that the handwriting input has been made in the candidate display of the display area. If the handwritten input is determined to have been performed in the candidate display of the display area, the process goes to step S718, otherwise, the process goes to step S730. For example, in the example illustrated in Fig. 16, it is determined that the handwriting input is performed in the display area outside the candidate display 80, and the process goes to step S730. Further, in the example illustrated in Fig. 17, it is determined that the handwriting input is performed in the display area of the candidate display 80, and the process goes to step S718.

In step S718, the processing unit 11 recognizes, based on one or more strokes obtained from the start of the input detected in step S706 until the end of the handwriting input detected in step S712, one character corresponding to the one or more strokes. The recognition way itself may be similar to step S604. In order to implement the correction of each character, the processing unit 11 performs the character recognition based on a single character candidate, without creating any combination candidate. Hereinafter, the character thus recognized is a correction recognition character. Note that, in step S718, the correction recognition character is recognized together with the correction candidate, like the recognized character in step S604. The correction recognition character generally corresponds to the first candidate (the likeliest candidate), and the correction candidate thereof corresponds to the candidate which is likely to be the second and so on.

In step S720, the processing unit 11 determines whether the correction recognition character is a deletion instruction. The deletion instruction is used to instruct to delete the recognized character of the correction target (an example of a control content). For example, the deletion instruction is realized by handwriting a predetermined character to the candidate display of the display area. Preferably, the predetermined character can conceptually represent a deletion, and may include a horizontal line "-", "/", "×" and the like, for example. The predetermined character ("-", etc.,) is set in advance, and users are informed of the predetermined character. For example, if the correction recognition character is the predetermined character and the evaluation value indicating the likelihood is greater than or equal to a predetermined threshold value, the processing unit 11 determines that the correction recognition character is a deletion instruction. In the example illustrated in Fig. 19, the user would like to erase the recognized character "3" of the correction target, the user performs handwriting input related to "-" in the display area of the candidate display 80. In response to such handwriting input, in the example illustrated in Fig. 19, the stroke related to the handwritten predetermined character "-" is rendered (see T5). In this case, the process goes to step S722.

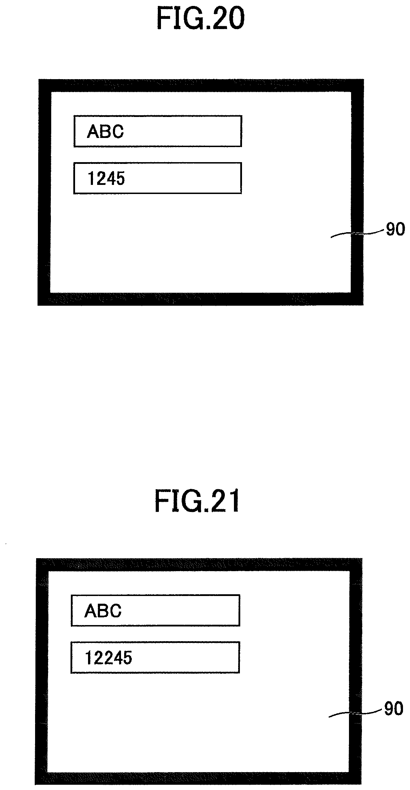

In step S722, the processing unit 11, in response to the deletion instruction, updates (reflects the deletion) the recognition result information in the storage unit 41 (see the arrow R4) such that the recognized character of the correction target is deleted. That is, the processing unit 11 deletes the recognition result information associated with the recognized character of the correction target from the storage unit 41. Further, the processing unit 11 deletes the stroke information relating to the recognized character of the correction target from the storage unit 41. As a result, by a screen update process in the next step S728, as illustrated in Fig. 20, the screen of the operation display surface 90 of the display operation device 101 is updated to display a character string in which the recognized character "3" of the correction target is deleted and a vacant portion by the deletion is filled (left-aligned).

In step S724, the processing unit 11 updates (reflects the replacement) the recognition result information in the storage unit 41 such that the recognized character of the correction target is replaced with the correction recognition character (see the arrow R3). Further, the processing unit 11 updates (reflects the replacement) the stroke information (the stroke coordinate information and the recognition result information) in the storage unit 41 (see the arrow R3). Specifically, the processing unit 11 allocates a new stroke ID to one or more strokes used for recognition in step S718 and generates the stroke coordinate information related to to the one or more strokes. Then, the processing unit 11 replaces the stroke coordinate information, which is related to the recognized character of the correction target in the storage unit 41, with the generated stroke coordinate information. Further, the processing unit 11 updates the recognition result information in the storage unit 41 by replacing the recognized character of the correction target and the stroke IDs thereof with the correction recognition character and the stroke IDs thereof. As a result, by a screen update process in the next step S728, as illustrated in Fig. 21, the screen of the operation display surface 90 of the display operation device 101 is updated to display a character string in which the recognized character "3" of the correction target is replaced with the correction candidate "2". Note that, then, the stroke information thus substituted can be used in a manner similar to the correction of the recognized character described above when the correction recognition character becomes a correction target.

In step S728, the processing unit 11 updates the screen based on the updated recognition result information. In this case, if the correction is a deletion, the processing unit 11 deletes the display position information of the recognized character of the correction target, to change the coordinate information of other recognized characters (i.e., reflects the change of the display position because of filling an empty portion due to the deletion). Further, if the correction is a replacement, the processing unit 11 updates the display position information (only the recognized character is replaced and the coordinate information is maintained).

In step S730, the processing unit 11 terminates the display of the candidate display to return to the original screen (see Fig. 11).

According to the character input reception apparatus 1 according to the first embodiment described above, the following effect can be obtained, for example.

First, as described above, according to the character input reception apparatus 1, because of step S606 of Fig. 6 (and step S724 in Fig. 7), the stroke information used in deriving the recognized character can be held without being deleted. This can reduce the labor of the correction to the character string by the user. That is, even for a character string whose input has been confirmed by the recognition application, the stroke information, which has been used to derive the recognized characters related to the character string, is held without being deleted, and thus it is possible to reduce the time and effort required to correct the character string whose input has been confirmed by the recognition application. Specifically, when the selection instruction for a character string is input by the user, a candidate display image screen that displays correction candidates can be generated and displayed based on the stroke information associated with the recognized characters according to the selection instruction. If a desired correction candidate for a user is present in the correction candidates, the user needs only to select the desired correction candidate (there is no need to perform handwriting input again), and thus time of correction is reduced. Further, even when the desired correction candidate for a user is not present in the correction candidates, the user performs, in a state of the candidate display image screen, handwriting input in the display area of the candidate display 80 so that the user can directly correct the recognized character of the correction target. That is, even when the desired correction candidate for the user is not present in the correction candidates, the user can directly correct the recognized character of the correction target, without performing an operation to return the candidate display image screen to the previous screen. Thus, labor of correction is reduced.

Here, the display area of the candidate display 80 is used as a writing area for correcting the recognized character of the correction target as described above, and thus it is desirable that the size of the display area of the candidate display 80 is larger in terms of recognition accuracy. In this respect, according to the character input reception apparatus 1, the display area of the candidate display 80 extends to the display area of the recognized character of the correction target. That is, the display area of the candidate display 80 is large enough such that the candidate display 80 hides the display of the recognized character of the correction target. As a result of this, the display area of the candidate display 80 can be enlarged, which improves the recognition accuracy for the handwritten input to the display area of the candidate display 80.

Note that such effects are particularly useful when the operation display surface 90 of the display operation device 101 in the character input reception apparatus 1 is relatively small (e.g., in the case of the device being in a form that is wearable on a user illustrated in Fig. 2). This is because, when the operation display surface 90 of the display operation device 101 is relatively small, the input of a software keyboard is virtually impossible and handwriting input (or speech input described hereinafter) is suitable. When the operation display surface 90 of the display operation device 101 is relatively small, the size constraints of the candidate display 80 are relatively large, and thus it is hard to increase the recognition accuracy with respect to the handwritten input to the display area of the candidate display 80.

Further, as described above, according to the character input reception apparatus 1, when the deletion instruction is input in the state of the candidate display image screen, the recognized character of the correction target is deleted. Therefore, for a user who wants to delete the recognized character of the correction target, the user can directly remove the recognized character of the correction target by handwriting the predetermined character (e.g., "-") in the state of the candidate display image screen.

In the first embodiment described above, the processes of Figs. 6 and 7 have been achieved by one application 10; however, this is not indispensable. For example, the processes of Figs. 6 and 7 may be implemented by respective different applications. That is, the application 10 may include a handwriting character recognition application that executes the process illustrated in Fig. 6 and a character correction application that executes the process illustrated in Fig. 7 separately. In this case, the character correction application executes the process illustrated in Fig.7, based on a character string (an example of a character string whose input has been confirmed by the recognition application) supplied from the handwriting character recognition application. In this case, the process in step S608 may be executed by the character correction application prior to the process illustrated in Fig. 7.

### [Second Embodiment]

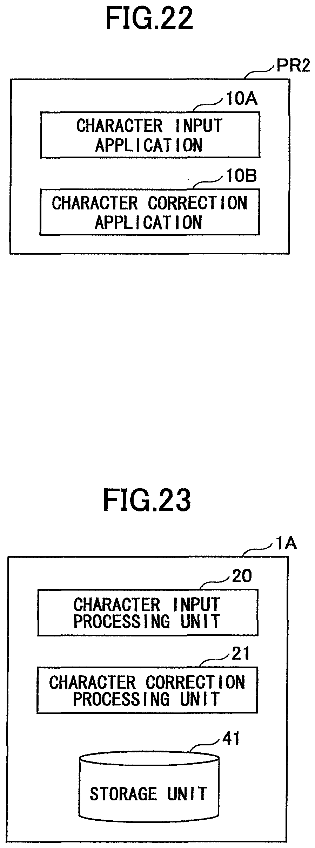

Next, with reference to Figs. 22 through 24, another embodiment (a second embodiment) is explained. In the following description, unless otherwise specified, the meaning of the various terms are as defined in the first embodiment described above.

Fig. 22 is a diagram explaining a program configuration according to an embodiment (a second embodiment).

Program PR2 includes a character input application 10A (an example of a recognition application), and a character correction application 10B.

The character input application 10A is a program that recognizes a character handwritten and displays the recognized character.

The character correction application 10B generates, in response to a selection instruction with respect to a character string (an example of a character string whose input has been confirmed by a recognition application) given as an input from the character input application 10A, a candidate display image screen that displays correction candidates. The candidate display image screen is generated based on stroke information stored by the character input application 10A. The character correction application 10B recognizes a character from strokes handwritten on the candidate display image screen. The character correction application 10B corrects, based on a recognition result (a content of a handwritten input) based on strokes handwritten to the candidate display image screen, the character string relating to the selection instruction. The candidate display and the correction way are the same as those of the first embodiment.

In the following description, an apparatus that performs the character input application 10A and a character correction application 10B is referred to as a "character input reception apparatus 1A".

The form of the character input reception apparatus 1A may be the same as that of the character input reception apparatus 1 according to the first embodiment described above (see Figs. 2 and 3).

Further, the hardware configuration of the character input reception apparatus 1A may be the same as that of the character input reception apparatus 1 according to the first embodiment described above (see Fig. 4). That is, the character input application 10A and the character correction application 10B are at least a part of various programs that control the character input reception apparatus 1A. The auxiliary storage device 103 stores the installed character input application 10A and character correction application 10B, and stores OS which is basic software, necessary files, data, and the like.

Fig. 23 is a diagram illustrating an example of a functional configuration of the character input reception apparatus. The character input reception apparatus 1A includes a character input processing unit 20, a character correction processing unit 21, and a storage unit 41.

The character input processing unit 20 is realized by the arithmetic processing unit 105 executing the character input application 10A. The character correction processing unit 21 is realized by the arithmetic processing unit 105 executing the character correction application 10B. The storage unit 41 is accessible by the character input processing unit 20 and the character correction processing unit 21.

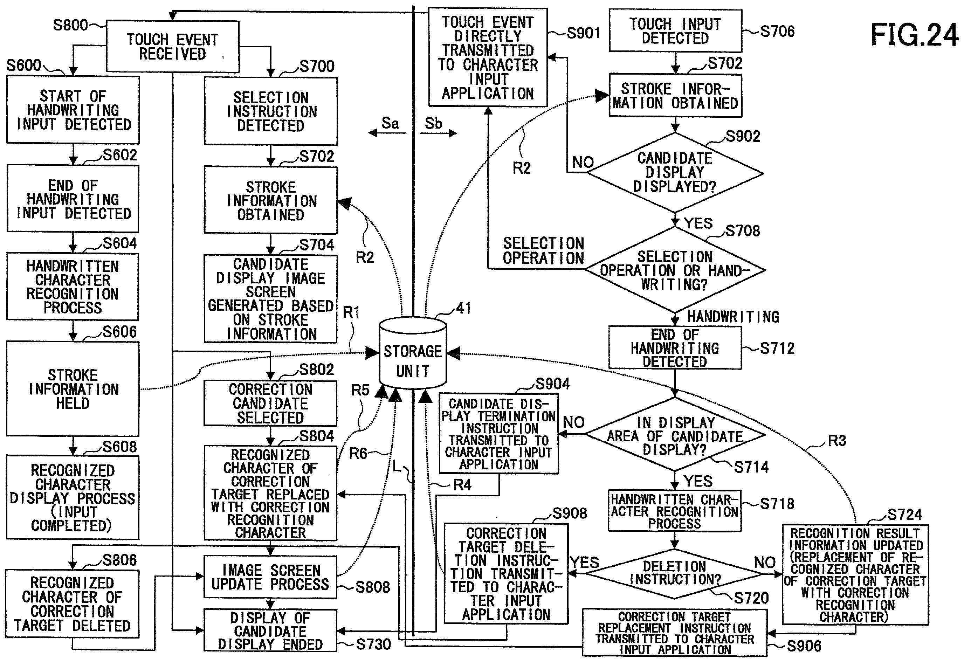

Fig. 24 is a schematic flow chart explaining an example of processing by the character input reception apparatus 1A. Fig. 24 schematically illustrates an example of a coordination between processing performed by the character input processing unit 20 and processing performed by the character correction processing unit 21. In Fig. 24, as is the case with Figs. 6 and 7, dotted lines and arrows R1 to R6 connected to the storage unit 41 indicate writing or reading data to or from the storage unit 41 related to the corresponding process.

In Fig. 24, processing that is substantially the same as the processing illustrated in Figs. 6 and 7 will be given the same step numbers and an explanation thereof is omitted. In Fig. 24, a region Sa isolated with a line L as a partition represents the processing of the character input application 10A, and the other region Sb represents the processing of the character correction application 10B.

In Fig. 24, an arrow directed to the region Sa from the region Sb beyond the line L represents an input from the character correction application 10B to the character input application 10A. In the example illustrated in Fig. 24, the character input application 10A operates by receiving the input from the character correction application 10B. That is, the character correction application 10B is at a layer higher than the character input application 10A.

In the following, first, a process implemented by the character correcting application 10B and then the process implemented by the character input application 10A will be described. [Process realized by the character correcting application 10B]

The character correction processing unit 21, upon detecting a touch input on the operation display screen 90 of the display operation device 101 (see the arrow R2) (step S706), obtains the stroke information stored in the storage unit 41 (step S702). The character correction processing unit 21 determines whether the candidates are displayed on the operation display surface 90 (step S902). For example, the character correction processing unit 21 derives the correction candidates based on the obtained stroke information, and determines that the candidates are displayed on the operation display surface 90 if the derived correction candidates correspond to a plurality of characters displayed on the operation display surface 90. This is because, when the candidates are displayed on the operation display surface 90, a plurality of characters displayed on the operation display surface 90 should include a plurality of correction candidates derived based on the obtained stroke information. Note that a plurality of characters (including characters of the candidate display when the candidate display is displayed) displayed on the operation display surface 90 can be determined based on information by OS, for example. If it is determined that the candidate display is not displayed, the character correction processing unit 21 sends the touch input (touch event), which has been detected, to the character input application 10A side as it is (step S901). On the other hand, if it is determined that candidate display is displayed, the character correction processing unit 21 determines whether the input detected in step S706 is a selection operation or a handwriting input (step S708). The character correction processing unit 21 sends the touch input (touch event), which has been detected, to the character input application 10A side as it is (step S901), if it is determined that the input detected in step S706 is a selection operation. On the other hand, the character correction processing unit 21 detects the end of handwritten input (step S712) if it is determined that the input detected in step S706 is a handwritten input. The character correction processing unit 21 determines, when having detected the end of the handwriting input, whether the handwriting input has been performed within the candidate display of the display area (step S714). If it is determined that the handwriting input has been performed within the candidate display of the display area, the character correction processing unit 21 performs, based on one or more strokes input by the handwriting, the recognition processing of the character corresponding to the one or more strokes (Step S718). On the other hand, if it is determined that the handwriting input has not been performed within the candidate display of the display area, the character correction processing unit 21 sends an instruction (hereinafter, referred to as "candidate display end instruction") to end the display of the candidate display to the character input application 10A side (step S904). If it is determined that the correction recognition character is a deletion instruction ("YES" in step S720), the character correction processing unit 21 sends a correction instruction (hereinafter, referred to as "correction target deletion instruction") to delete the recognized character of the correction target to the character input application 10A side (step S908). The correction target deletion instruction includes information identifying the recognized character of the correction target. The correction target deletion instruction causes the character correction processing unit 21 to update (reflect the deletion) the stroke information and the recognition result information in the storage unit 41 (arrow R4). If it is determined that the correction recognition character is not a deletion instruction ("NO" in step S720), the character correction processing unit 21 sends a correction target replacement instruction to the character input application 10A side (step S906), after the process of step S724. The correction target replacement instruction is a correction instruction that causes the character input application 10A to replace the recognized character of the correction target with the correction recognition character. The correction target replacement instruction includes information identifying the recognized character of the correction target and information of the correction recognition character.

### [Process is realized by the character input application 10A]

The character input processing unit 20 operates in response to the inputs (touch events and various instructions) from the character correction application 10B.

When the character input processing unit 20 receives the touch event (step S800), the process goes to step S600, step S700, step S802 or step S730, depending on the form of the touch event.

If the touch event is handwriting input, the character input processing unit 20 detects the start of the handwriting input (step S600), and performs the processes until steps S608 (see Fig. 6).

If the touch event is a touch input to the display area of one or more recognized characters displayed on the operation display surface 90, the character input processing unit 20 detects a selection instruction with respect to the one or more recognized characters (an example of a character string whose input has been confirmed by a recognition application) (step S700). In this case, the character input processing unit 20 identifies, based on the display position information stored in the storage unit 41, the recognized character, which corresponds to the touch input position, as a correction target. Then, the character input processing unit 20 derives correction candidates based on the stroke information stored in the storage unit 41, and generates the candidate display image screen that displays the derived correction candidates (step S704).

If the touch event is a single tap of the display area of the candidate (see the selection operation step S708), the character input processing unit 20 identifies (selects) the correction candidate corresponding to the touch input position as a correction recognition character (step S802). In this case, the character input processing unit 20 replaces the recognized characters of the correction target with the correction recognition character (step S804) to perform a screen update processing (step S808). The replacement process using the correction recognition character selected in step S802 causes the character input processing unit 20 to update (reflect the replacement) the recognition result information in the storage unit 41 (see the arrow R5). The screen update processing in step S808 causes the character input processing unit 20 to update the display position information (see the arrow R6).

If the touch event is a single tap instructing the end of the candidate display, the character input processing unit 20 ends the display of the candidate display such that the original screen is restored (see Fig. 11) (step S730). Note that the single tap instructing the end of the candidate display is a single tap to the display area of an end button (touch switch), for example. Alternatively, the instruction of the end of the candidate display may be a touch event of handwriting input performed outside the display area of the candidate display (see Fig. 16). In this case, in the character correction application 10B, step S904 is omitted, and the process goes to step S901 in the case of "NO" in step S714.

The character input processing unit 20, when having received the candidate display end instruction (the step S904), ends the display of the candidate display such that the original screen is restored (see Fig. 11) (step S730).

The character input processing unit 20, when having received the correction target deletion instruction (step S908), deletes the recognized character of the correction target (step S806) based on the corrected target deletion instruction, and performs the screen update processing (step S808). The screen update processing in step S808 causes the character input processing unit 20 to update the display position information (see the arrow R6).

The character input processing unit 20, when having received the correction target replacement instruction (step S906) replaces the recognized character of the correction target with the correction recognition character (step S804), and performs the screen update processing (step S808). The replacement process in step S804 causes the character input processing unit 20 to update (reflect the replacement) the stroke information in the storage unit 41 (see the arrow R5). The screen update processing in step S808 causes the character input processing unit 20 to update the display position information (see the arrow R6).

According to the character input reception apparatus 1A of the second embodiment described above, the same effect as the character input reception apparatus 1 according to the first embodiment described above is obtained. Further, according to the character input reception apparatus 1A of the second embodiment, by linking the character correction application 10B to the character input application 10A having high versatility, it is possible to obtain the same effect as the character input reception apparatus 1. Therefore, by additionally mounting the character correction application 10B to a device in which the character input application 10A is mounted, it is possible to enhance the convenience of the correction function.

Note that in the second embodiment, two applications are used; however, it is also possible to realize the same function by using more than two applications.

### [Third Embodiment]

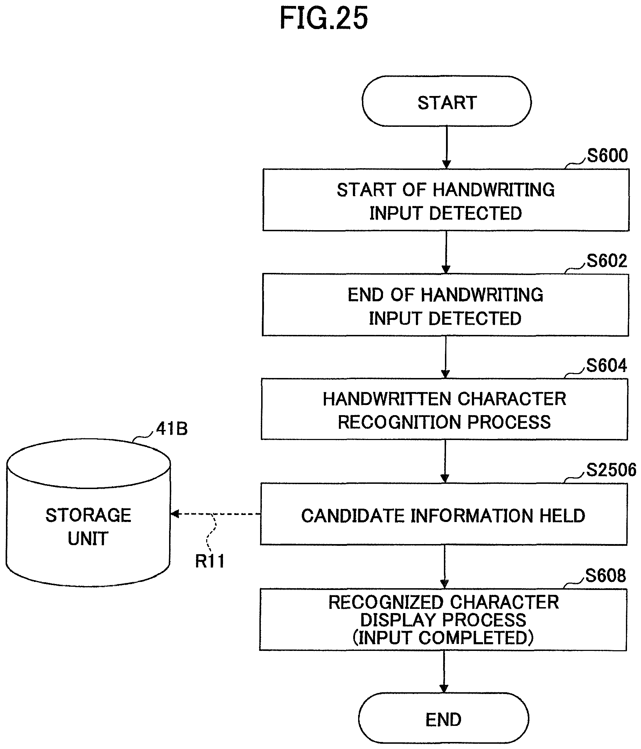

Next, with reference to Figs. 25 through 27, a third embodiment is explained. In the following description, unless otherwise specified, the meaning of the various terms are as defined in the first embodiment described above.

A character input reception apparatus 1B according to the third embodiment (not illustrated) is different in that an application to be executed is not the application 10 but an application 10B (not illustrated).

Application 10 includes a handwriting character recognition application (an example of a recognition application) that recognizes handwritten input characters, and displays recognized characters.

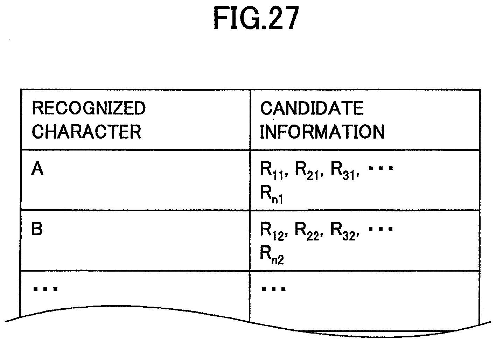

The application 10B generates, in response to a selection instruction with respect to a character string whose input has been confirmed by a recognition application, a candidate display image screen that displays correction candidates. The candidate display image screen is generated based on stored candidate information (see Fig. 27). The candidate information represents characters of correction candidates for a recognized character. The candidate display is the same as that of the first embodiment. The application 10B recognizes a character from strokes handwritten on the candidate display image screen. The application 10B corrects, based on a recognition result (a content of a handwritten input) based on strokes handwritten to the candidate display image screen, the character string relating to the selection instruction. The correction way is described hereinafter.

The form of the character input reception apparatus 1B may be the same as that of the character input reception apparatus 1 according to the first embodiment described above (see Figs. 2 and 3). Further, the hardware configuration of the character input reception apparatus 1B may be the same as that of the character input reception apparatus 1 according to the first embodiment described above (see Fig. 4).

The character input reception apparatus 1B includes a processing unit 11B, and a storage unit 41B (not illustrated). The processing unit 11B is realized by the arithmetic processing unit 105 executing the application 10B. The storage unit 41B is realized by the auxiliary storage device 103 and the memory device 104.

The character input reception apparatus 1B executes a character input process and a character correction process. Hereinafter, examples of the character input process and the character correction process executed by the character input reception apparatus 1B are explained.

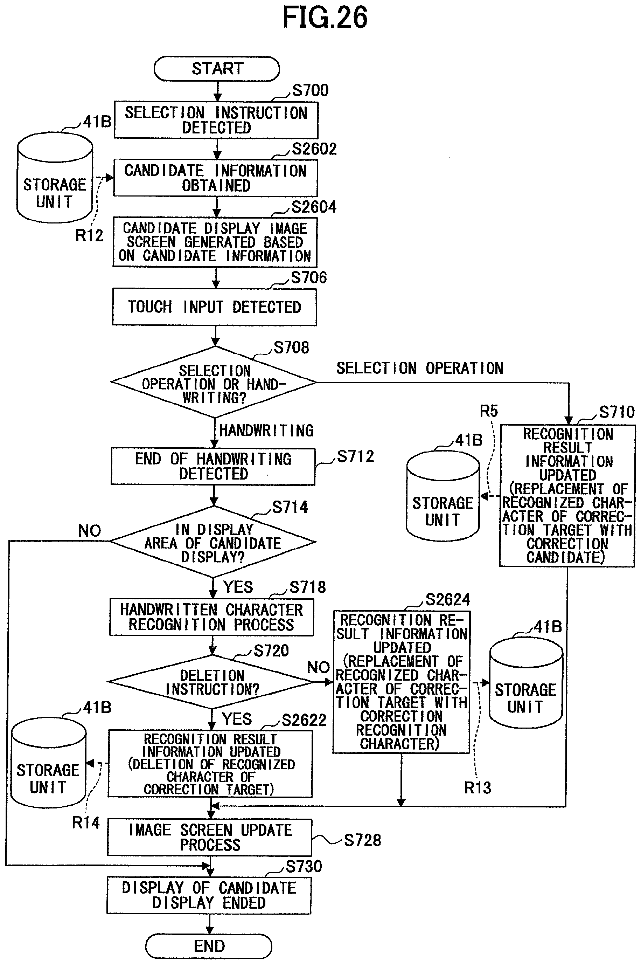

Figs. 25 and 26 are schematic flow charts explaining an example of processing by the character input reception apparatus 1. Fig. 25 is a schematic flow chart explaining an example of the character input process performed by the processing unit 11B. Fig. 26 is a schematic flow chart explaining an example of the character control process performed by the processing unit 11B. In Figs. 25 and 26, dotted lines and arrows R11 to R14 connected to the storage unit 41B indicate writing or reading data to or from the storage unit 41B related to the corresponding process.

In Fig. 25, processes that are the same as those illustrated in Fig. 6 are given the same step numerals, and an explanation thereof is omitted.

In step S2506, the processing unit 11B holds information (candidate information) identifying characters of one or more correction candidates derived during recognition in the step S604 in the storage unit 41B (see the arrow R11). The candidate information is stored for each recognized character. For example, in the example illustrated in Fig. 27, the candidate information related to each recognized character "A", "B" ... is illustrated. In the example illustrated in Fig. 27, for example, the candidate information relating to "A" includes n correction candidate characters "R 11", "R 21 ", "R 31", ···, "R n1". This means that, in recognizing the recognized character "A", n correction candidate characters "R 11", "R 21 ", "R 31", ···, "R n1" are obtained as the second and subsequent candidates.

Next, the processing in Fig. 26 is described. In Fig. 26, processes that are the same as those illustrated in Fig. 7 are given the same step numerals, and an explanation thereof is omitted.

In step S2602, the processing unit 11B obtains the candidate information stored in the storage unit 41B (see the arrow R12). In this case, the processing unit 11B obtains the candidate information relating to the recognized character of the correction target.

In step S2604, the processing unit 11B generates, based on the candidate information obtained in step S2602, the candidate display image screen that displays the correction candidates. The candidate display image screen includes selectable correction candidates. The candidate display itself is as described above.

In step S2622, the processing unit 11B, in response to the deletion instruction, updates (reflects the deletion) the recognition result information in the storage unit 41B (see the arrow R14) such that the recognized character of the correction target is deleted. That is, the processing unit 11B deletes the recognition result information associated with the recognized character of the correction target. As a result, by a screen update process in the next step S728, the screen of the operation display surface 90 of the display operation device 101 is updated to display a character string in which the recognized character of the correction target is deleted. In this case, the processing unit 11B deletes the candidate information relating to the recognized character of the correction target (see the arrow R14).

In step S2624, the processing unit 11B updates (reflects the replacement) the recognition result information in the storage unit 41B such that the recognized character of the correction target is replaced with the correction recognition character (see the arrow R13). Further, the processing unit 11B updates (reflects the replacement) the candidate information in the storage unit 41B (see the arrow R13). As a result, by a screen update process in the next step S728, the screen of the operation display surface 90 of the display operation device 101 is updated to display a character string in which the recognized character of the correction target is replaced with the correction recognition character.

According to the character input reception apparatus 1B of the third embodiment described above, the same effect as the character input reception apparatus 1 according to the first embodiment described above is obtained. Further, according to the character input reception apparatus 1B according to the third embodiment, as compared with first embodiment described above, the processing load for deriving correction candidates can be reduced. Specifically, in the first embodiment described above, the processing unit 11 obtains the stroke information stored in the storage unit 41, and derives, based on the obtained stroke information, the correction candidates related to the recognized character of the correction target. In contrast, according to the third embodiment, the processing unit 11B obtains the candidate information stored in the storage unit 41B. Therefore, according to the third embodiment, since the processing unit 11B can generate the candidate display using the past character input processing result, it is not necessary for the processing unit 11B to derive the correction candidates again, which can reduce the processing load of the processing unit 11B for generating the candidate display.

Note that, also in the third embodiment, the application 10B may be implemented in two applications in the same manner as in the second embodiment described above. That is, in the second embodiment described above, in a similar manner as the third embodiment, the candidate display may be generated by using the candidate information obtained at the time of handwriting input, instead of the stroke information. In this case, likewise, in step S704, the character input processing unit 20 need not derive the correction candidate again and can generate the candidate display using the past character input processing result. Further, in this case, in step S902, the character correction processing unit 21 can use the candidate information to determine whether the candidate display is displayed on the operation display surface 90.

### [Fourth Embodiment]

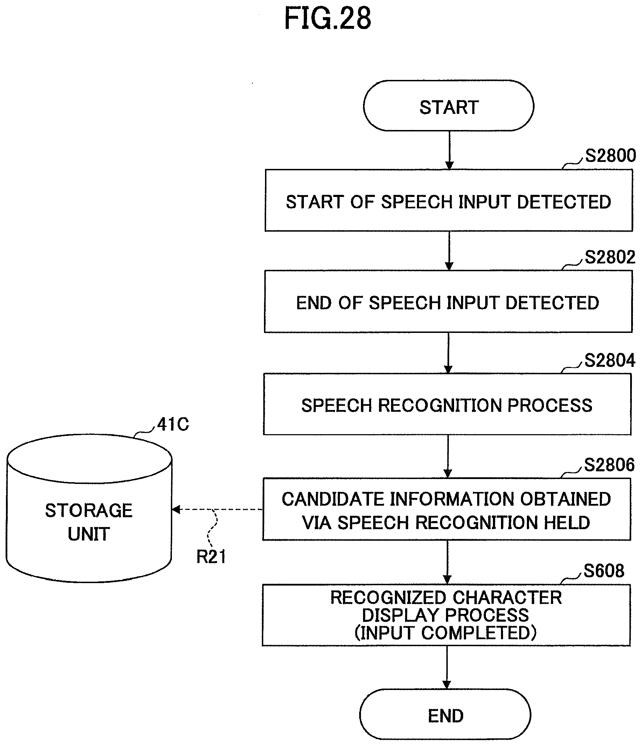

Next, with reference to Fig. 28, a fourth embodiment is explained. In the following description, unless otherwise specified, the meaning of the various terms are as defined in the first embodiment described above.

A character input reception apparatus 1C according to the fourth embodiment (not illustrated) is different in that an application to be executed is not the application 10 but an application 10C (not illustrated).

The application 10C includes a speech recognition application (an example of a recognition application) that recognizes speech input characters, and displays recognized characters. The application 10C further includes a program that recognizes a character handwritten and displays the recognized character.

The application 10C generates, in response to a selection instruction with respect to a character string whose input has been confirmed by a recognition application, a candidate display image screen that displays correction candidates. The candidate display image screen is generated based on stored candidate information. The candidate information itself is as described above. The candidate display is the same as that of the first embodiment. The application 10C recognizes a character from strokes handwritten on the candidate display image screen. The application 10C corrects, based on a recognition result (a content of a handwritten input) obtained on the candidate display image screen, the character string relating to the selection instruction. The correction way is the same as that of the third embodiment.

The form of the character input reception apparatus 1C may be the same as that of the character input reception apparatus 1 according to the first embodiment described above (see Figs. 2 and 3). Further, the hardware configuration of the character input reception apparatus 1C may be the same as that of the character input reception apparatus 1 according to the first embodiment described above (see Fig. 4).

The character input reception apparatus 1C includes a processing unit 11C, and a storage unit 41C (not illustrated). The processing unit 11C is realized by the arithmetic processing unit 105 executing the application 10C. The storage unit 41 is realized by the auxiliary storage device 103 and the memory device 104.

The character input reception apparatus 1C executes a character input process and a character correction process. The character correction process that the character input reception apparatus 1C performs is similar to the character correction process (Fig. 26) according to the third embodiment described above, and thus an explanation thereof is omitted.

Fig. 28 is a schematic flow chart explaining an example of the character input process performed by the processing unit 11C. In Fig. 28, dotted lines and arrows R21 to R24 connected to the storage unit 41C indicate writing or reading data to or from the storage unit 41C related to the corresponding process.

In Fig. 28, processes that are the same as those illustrated in Fig. 6 are given the same step numerals, and an explanation thereof is omitted.

In step S2800, the processing unit 11C detects a start of the speech input. The start of the speech input is detected when the speech input is detected in a state in which any speech input is not detected for a certain time or more, for example.

In step S2802, the processing unit 11C detects an end of the speech input. The end of the speech input is detected when the speech input is not detected for the certain time.

In step S2804, the processing unit 11C, based on speech data obtained from the start of the speech input detected in step S2800 until the end of the speech input detected in step S2802, recognizes one or more corresponding characters to the speech data. Hereinafter, as described above, the character thus recognized is also referred to as "recognition character". For example, the processing unit 11C, in recognizing a character based on the speech data, creates a plurality of candidates, and calculates, for each candidate, an evaluation value representing the likelihood of the candidate. Then, the processing unit 11C outputs the candidate having the highest evaluation value as the first candidate (recognized character).

In step S2806, the processing unit 11C holds information (candidate information) identifying characters of one or more correction candidates derived during recognition in the step S2804 in the storage unit 41C (see arrow R21). The candidate information is as described above.

According to the character input reception apparatus 1C of the fourth embodiment described above, the same effect as the character input reception apparatus 1 according to the first embodiment described above is obtained. Further, according to the character input reception apparatus 1C according to the fourth embodiment, as compared with the third embodiment described above, the processing load for deriving correction candidates can be reduced. Specifically, according to the fourth embodiment, the processing unit 11C obtains the candidate information stored in the storage unit 41C, and generates the candidate display based on the obtained candidate information. Therefore, according to the fourth embodiment, it is not necessary for the processing unit 11C to derive the correction candidates again, since the processing unit 11C can generate the candidate display using the past character input processing result, which can reduce the processing load of the processing unit 11C for generating the candidate display.

Note that, also in the fourth embodiment, the application 10C may be implemented in two applications in the same manner as in the second embodiment described above. That is, in the second embodiment described above, in a similar manner as the fourth embodiment, the candidate display may be generated by using the candidate information obtained at the time of speech input, instead of the stroke information.

In the present embodiment 4, the candidate information obtained in the speech recognition is used to generate the candidate display; however, it is also possible to use the speech data used for speech recognition to generate the candidate display. In this case, in step S2806, processing unit 11C may hold the speech data used at the time of recognition in step S2804 in the storage unit 41C. In this case, the processing unit 11C, when generating the candidate display, may derives, based on the speech data stored in the storage unit 41C, the correction candidates to generate the candidate display. Thus, the processing unit 11C can generate, in accordance with the selection instruction with respect to the character string whose input has been confirmed by the recognition application, the candidate display image screen, by using the held speech data or candidate information. [Variation]

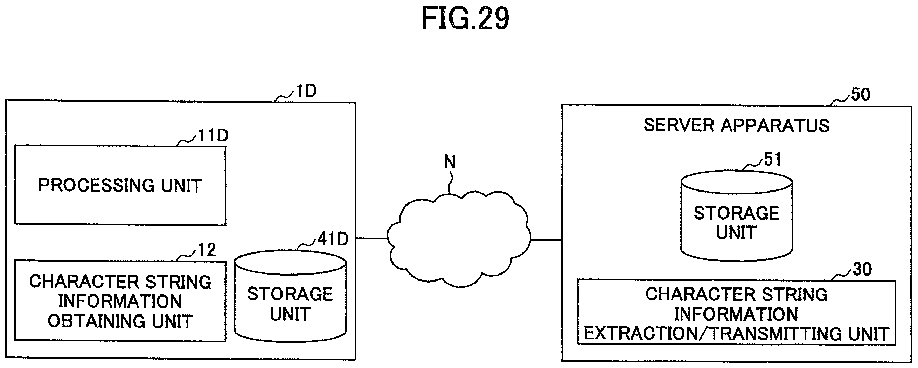

Fig. 29 is a diagram illustrating a configuration according to a variant. In the example illustrated in Fig. 29, the character input reception apparatus 1D is connected through a network N to a server apparatus 50. The character input reception apparatus 1D includes a processing unit 11D, a character string information obtaining unit 12, and a storage unit 41D. Further, the server apparatus 50 includes a storage unit 51 and a character string information extraction/transmission unit 30. In the storage unit 51 of the server apparatus 50, character strings, and stroke information in association with the character strings are stored. Note that, information stored in the storage unit 51 of the server apparatus 50 (i.e., the character strings, and the stroke information in association with the character strings) is not necessarily information that is generated by the character input reception apparatus 1D, and thus may include information generated by executions of a recognition application in other apparatuses. The character string information obtaining unit 12 of the character input reception apparatus 1D requests, in response to an instruction from the user, for example, the designated character string and the stroke information associated therewith to the server apparatus 50. A character string information extraction/transmitting unit 30 of the server apparatus 50 extracts, in response to the request from the character input reception apparatus 1D, the designated character string and the stroke information associated therewith from the storage unit 51, to transmit it to the input reception apparatus 1D. The processing unit 11D of the character input reception apparatus 1D stores the acquired stroke information in the storage unit 41D, and displays the character string. In this case, the processing unit 11D generates the display position information corresponding to the display position of the character string, and stores it in the storage unit 41D. The processing unit 11D, after having thus output the character string, performs the character correction process illustrated in Fig. 7. According to such a variant, even when the character input reception apparatus 1D does not store the information related to the character string of the correction target, the character input reception apparatus 1D can acquire the information from the server apparatus 50, which enables the correction of the character string in the same manner as in the first embodiment described above. Note that such a variant can be applied to the other embodiments, the second to fourth embodiments, described above. For example, if such a variant is applied to the third embodiment described above, the character input reception apparatus 1D may acquire the candidate information from the server apparatus 50 in place of the stroke information. In the present variant, in the storage unit 51 of the server apparatus 50, character strings and stroke information in association with the character strings are stored; however, in the storage unit 51 of the server apparatus 50, only the stroke information may be stored such that the stroke information can be extracted in association with information that can identify the character string. In this case, the character input reception apparatus 1D may only hold the information of the character strings in the storage unit 41D, and may obtain only the stroke information from the server apparatus 50.

### [Other examples of a way of handwriting a correction content]

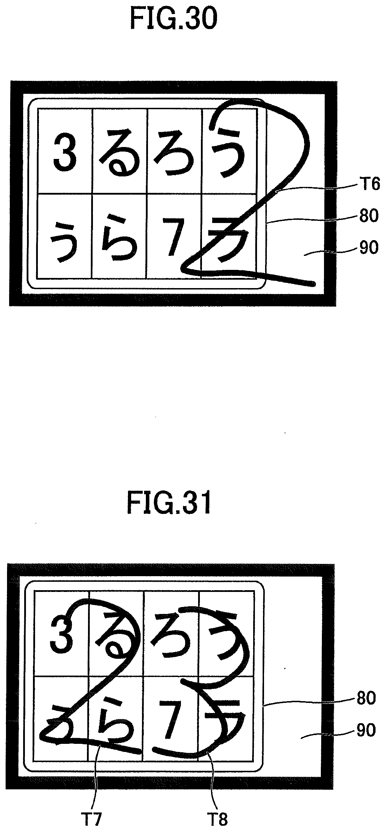

Next, with reference to Figs. 30 to 33, another example of the way of handwriting the correction content in a situation where the candidate display is displayed will be described. The following other examples of the way of handwriting the correction content can replace or be added to the way according to the first through fourth embodiments (and the variant illustrated in Fig. 29, hereinafter the same). In the following, a variant in the case of being adopted in the described above first embodiment is described; however, the same holds true for the second through fourth embodiments.

Figs. 30 to 33 are diagrams illustrating another example of the way of handwriting the correction content, and schematically include each screen (candidate display image screen) in the operation display surface 90 of the display operation device 101.

In the example illustrated in Fig. 30, an area in which handwriting input for the correction can be accepted is set on the entire candidate display image screen. In the example illustrated in Fig. 30, an example of a display rendered in accordance with the stroke of handwriting input related to the correction content "2" is illustrated and indicated by T6.

Here, in the first embodiment described above, the area in which handwriting input for the correction can be accepted is the display area of the candidate display (see Fig. 17). In this way, the area in which handwriting input for the correction can be accepted can be the entire candidate display image screen. Also, the area in which handwriting input for the correction can be accepted may be a part of the candidate display image screen, or may be different from the display area of the candidate display.

If the way of handwriting the correction content illustrated Fig. 30 is employed in the first embodiment described above, the determination in step S714 in the first embodiment described above is unnecessary.

According to the example illustrated in Fig. 30, because the handwriting input for a correction is possible in the entire candidate display image screen, it becomes easy for users to handwrite the correction content. Such effects are particularly substantial when the size of the candidate display image screen is small. If the size of the candidate display image screen is small, the size of a part thereof is further reduced, which makes it difficult to perform handwriting input.

In the example illustrated in Fig. 31, a correction content handwritten includes two characters. In the example illustrated in Fig. 31, an example of a display rendered in accordance with the strokes of handwriting input related to the correction content "2" and "3" is illustrated and the strokes related to correction content "2" and "3" are indicated by T7 and T8, respectively.

Here, in the first embodiment described above, the correction content to be handwritten includes only one character (see Fig. 17). Thus, the correction content to be handwritten may include two characters or more characters.

If the way of handwriting the correction content illustrated in Fig. 31 is employed in the first embodiment described above, in step S718, the processing unit 11 derives, in addition to one character candidate, a combination candidate of 2 or more characters, and derives the candidate (correction recognition character) with the highest evaluation value. In this case, if there are two or more correction recognition characters, the processing unit 11 replaces recognized character (1 character) of the correction target with the two or more correction recognition characters (step S724).

According to the example illustrated in Fig. 31, the recognized character of the correction target can be replaced with two or more correction recognition characters, which increases flexibility of the correction and thus increases convenience for the user. For example, when the user wants to insert a certain one character, the user can select one of the characters before or after the desired insertion position, and handwrite two characters of the selected characters (recognized character of the correction target) and a character to be inserted so that the correction of the character string with the desired insertion.

In the example illustrated in Fig. 31, in the area in which handwriting input for the correction can be accepted (in this example, the display area of the candidate display), input frames are not displayed on a character basis; however, such input frames may be displayed. In this case, separation between two or more characters becomes easy to be recognized, which increases recognition accuracy for more than one character.

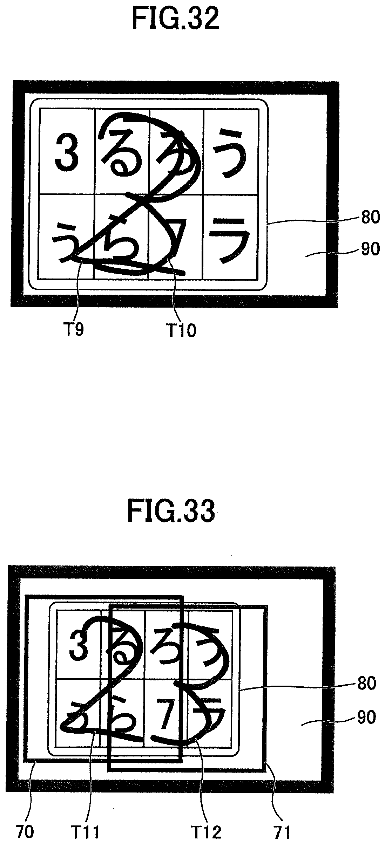

In the example illustrated in Fig. 32, two characters are handwritten in an overlapped manner (overwritten manner). In the example illustrated in Fig. 32, an example of a display rendered in accordance with the strokes of handwriting input related to the correction content "2" and "3" is illustrated and the strokes related to correction content "2" and "3" are indicated by T9 and T10, respectively.

Here, in the first embodiment described above, the correction content to be handwritten includes only one character (see Fig. 17). Thus, the correction content to be handwritten in an overlapped manner may include two characters or more characters.

If the way of handwriting the correction content illustrated Fig. 32 is employed in the first embodiment described above, in step S712, the predetermined time ΔT for detecting the end of the handwriting input is set to be greater than a predetermined time ΔT2 required to recognize the separation between two or more characters. In the case of overwriting, the predetermined time ΔT2 corresponds to a time (blank time in which there is no input) from the time of finishing handwriting a character to the time of the start of handwriting the next character. Note that the predetermined time ΔT2 tends to be longer than the blank time occurring between strokes at the time of handwriting a character.

According to the example illustrated in Fig. 32, as is the case with the example illustrated in Fig. 31, the recognized character of the correction target can be replaced with two or more correction recognition characters, which increases flexibility of the correction and thus increases convenience for the user. In the case of handwriting input in an overwriting manner, compared with the case of handwriting each character in different locations as illustrated in Fig. 31, it becomes easier for users to handwrite the correction content because it possible to handwrite to a wider area per character. However, on the other hand, a user, after finishing handwriting a character, needs to wait for a time corresponding to the predetermined time ΔT2 before handwriting the next character, and thus the time required for handwriting input becomes longer than the example illustrated in Fig. 31.

In the example illustrated in Fig. 33, a correction content handwritten includes two characters. In the example illustrated in Fig. 33, an example of a display rendered in accordance with the strokes of handwriting input related to the correction content "2" and "3" is illustrated and the strokes related to correction content "2" and "3" are indicated by T11 and T12, respectively. The example illustrated in Fig. 33 differs from the example illustrated in Fig. 31 in that input frames 70 and 72 are displayed. Further, in the example illustrated in Fig. 33, the input frames 70 and 71 are overlapped with each other. That is, the input frames 70 and 71 are arranged in a manner partially overlapping with respect to each other.

According to the example illustrated in Fig. 33, the same effects as the example illustrated in Fig. 31 can be obtained. Further, according to the example illustrated in Fig. 33, because the input frame 70 and 71 are overlapped with each other, even if the area in which handwriting input for the correction can be accepted is relatively small, it becomes possible to replace the recognized character of the correction target with two or more correction recognition characters. Further, according to the example illustrated in Fig. 33, the continuous handwriting input of two or more characters is possible, which can reduce the inconvenience (disadvantage that the input time becomes longer due to latency) that occurs in the example illustrated in Fig. 32. Further, according to the example illustrated in Fig. 33, because the position of the input frame 70 and 71 are shifted, the inconvenience (deterioration of recognition accuracy) that occurs in the example illustrated in Fig. 32 can be reduced.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention. Further, all or part of the components of the embodiments described above can be combined.

For example, in the embodiments described above, the display area of the candidate display 80 is set in a range excluding a portion of the display area on the right side of the candidate display image screen; however, this is not indispensable. The display area of the candidate display 80 may be set to the entire candidate display image screen.

For example, in the embodiments described above, the candidate display 80 includes a plurality of correction candidates arranged in lateral two rows; however, the number of displayed correction candidates and the display way is arbitrary. For example, the candidate display 80 may provide a single correction candidate, or may provide a plurality of correction candidates in a horizontal row.

Further, in the third embodiment described above, the character correction process illustrated in Fig. 26 is applied to the character string whose input has been confirmed by the handwriting character recognition application; however, the character correction process illustrated in Fig. 26 is applicable to any character string whose input has been confirmed by other character recognition applications. For example, the character correction process illustrated in Fig. 26 is also applicable to a character string whose input has been confirmed by a gesture recognition application. In this case, by using the candidate information used in the gesture recognition, it becomes possible to generate the candidate display image screen in response to the selection instruction to the character string whose input has been confirmed by the gesture recognition application.

Further, in the first to fourth embodiments described above, the candidate display is displayed on a part of the candidate display image screen. However, the candidate display may be displayed on the entire candidate display image screen. In this case, it becomes easy for users to handwrite the correction content because the users can handwrite the correction content to a wider area, although the users cannot handwrite the correction content while viewing the character string to be corrected. From the same viewpoint, the candidate display is smaller in an area than the entire candidate display image screen; however, the candidate display may be displayed in a region overlapping the character string to be corrected.

Further, in the first to fourth embodiments described above, the candidate may be formed such that the predetermined character related to the deletion instruction (e.g., "-") can be selected. That is, the candidate display may include the predetermined character related to a delete instruction along with the correction candidates. In this case, a user who wants to delete the recognized character of the correction target need not handwrite the predetermined character related to the deletion instruction so that the user may simply select the predetermined character related to the deletion instruction included in the candidate display to input the delete instruction.

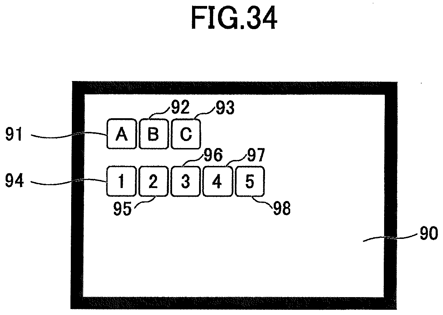

Further, in the first embodiment described above (the same applies to the second to fourth embodiments), the selection operation with respect to the character string is realized by the touch input to the display position of the character in the character string; however, the selection operation may be input in other ways. For example, in the example illustrated in Fig. 34, buttons (touch switches) 91 to 98 are displayed for each recognized character. In this case, the selection instruction is implemented when one of the buttons 91 to 98 is touched. At this time, the processing unit 11 can identify the recognized character of the correction target based on the touched button. Alternatively, the selection instruction may be implemented when the characters in the character string is selected by a cursor or pointer, for example.

### [Description of Reference Symbols]

- 1: character input reception apparatus
- 10: application
- 10A: character input application
- 10B: character correction application
- 11: processing unit
- 20: character input processing unit
- 21: character correction processing unit
- 41: storage unit
- 80: candidate display

## Claims

1. A method of receiving input characters with a computer, the computer executing a process, the process comprising:
receiving, on a display image screen for displaying handwritten characters, a selection instruction with respect to a handwritten certain character;
displaying, on the display image screen, a candidate display image screen for displaying a correction candidate with respect to the certain character, in response to a reception of the selection instruction, a display area for the candidate display image screen extending at least to a display area for the certain character, and
performing a correction process for the certain character in response to a handwritten input with respect to the candidate display image screen.

2. The method of claim 1, wherein the correction process includes replacing the certain character with a character obtained by recognizing the handwritten input.

3. The method of claim 1, wherein the correction process includes correcting the certain character according to a control content associated with the handwritten input.

4. The method of claim 1, wherein the correction candidate is displayed based on strokes corresponding to the certain character.

5. The method of claim 4, wherein the candidate display image screen is generated based on data related to the strokes corresponding to the certain character or data related to the correction candidate, the correction candidate being generated based on the strokes.

6. The method of claim 1, wherein the selection instruction is detected based on a touch input to a display position of the certain character.

7. The method of claim 1, wherein a content of the handwritten input with respect to the candidate display image screen is recognized based on a handwritten input in a display area for the correction candidate.

8. The method of claim 1, wherein a content of the handwritten input is recognized based on a handwritten input in an input area, the input area being set to the entire candidate display image screen.

9. The method of claim 1, wherein the handwritten input with respect to the candidate display image screen includes a handwritten input related to two or more characters.

10. The method of claim 1, wherein the certain character is included in a character string whose input has been confirmed by a recognition application.

11. The method of claim 1, wherein the process further includes
displaying, on a display part of a device which a person can wear or a device which a person can carry, the certain character, wherein
the candidate display image screen is generated on the display part.

12. A character input reception apparatus comprising a processor, the processor being configured to
receive, on a display image screen for displaying handwritten characters, a selection instruction with respect to a handwritten certain character;
display, on the display image screen, a candidate display image screen for displaying a correction candidate with respect to the certain character, in response to a reception of the selection instruction, a display area for the candidate display image screen extending at least to a display area for the certain character, and
perform a correction process for the certain character in response to a handwritten input with respect to the candidate display image screen.

13. The character input reception apparatus of claim 12, further comprising a storage device configured to store data related to strokes corresponding to the certain character or data related to the correction candidate, the correction candidate being generated based on the strokes, wherein
the processor is configured to generate the candidate display image screen based on the data stored in the storage device.

14. A character input reception program configured to cause a computer to
receive, on a display image screen for displaying handwritten characters, a selection instruction with respect to a handwritten certain character;
display, on the display image screen, a candidate display image screen for displaying a correction candidate with respect to the certain character, in response to a reception of the selection instruction, a display area for the candidate display image screen extending at least to a display area for the certain character, and
perform a correction process for the certain character in response to a handwritten input with respect to the candidate display image screen.
